# NEW EUROPEAN PATENT SPECIFICATION

(11) **EP 2 670 902 B2**
(45) Date of publication and mention of the opposition decision: **18.12.2019**
(45) Mention of the grant of the patent: 17.08.2016
(21) Application number: 12701521.2
(22) Date of filing: 30.01.2012
(51) Int. Cl.: D04H 1/70, D04H 1/72, C03C 13/06, D04H 1/732

(54) **METHOD FOR REMOVING SHOT FROM MINERAL FIBRE MATERIAL**
VERFAHREN ZUM ENTFERNEN VON FASERGRANULAT AUS EINEM MINERALFASERMATERIAL
PROCÉDÉ D'ÉLIMINATION DES AMAS GRANULAIRES DANS UN MATÉRIAU EN FIBRE MINÉRALE

(30) Priority: 31.01.2011 EP 11152799
(43) Date of publication of application: 11.12.2013
(73) Proprietor: Rockwool International A/S, 2640 Hedehusene (DK)
(72) Inventor: GHIJZEN, Cor, J., M., 6114 MZ Susteren (NL); KESSELS, Pedro, H., J., 6071 SC Swalmen (NL)
(74) Representative: Gill Jennings & Every LLP
(86) International application number: PCT/EP2012/051458
(87) International publication number: WO 2012/104255

(56) References cited:
- EP-A2- 0 100 942
- WO-A1-2011/012712
- WO-A1-2012/013810
- GB-A- 2 069 876
- GB-A- 2 069 876
- US-A- 2 317 895
- US-A- 2 609 313
- US-A- 3 133 319
- US-A- 3 308 945
- US-A- 3 792 943
- US-A- 3 834 869

## Description

This invention relates to the treatment of man-made vitreous fibres material so as to reduce the content of shot in the material. In particular, the invention relates to the treatment of fibres that are not subsequently bonded to form a consolidated batt, but are instead used as loose fibres.

It is standard practice to manufacture man-made vitreous fibres by fiberising a vitreous melt into an air stream which is moving towards a collector and thereby forming a cloud of the primary fibres moving towards the collector and collecting the fibres of the collector as a man-made vitreous fibre. The fiberisation is usually conducted by the use of at least one centrifugal fiberising rotor. Often a plurality of fiberising rotors is used in the form of a cascade spinner.

In the production of man-made vitreous fibres, it is very common for significant amounts of non-fibrous material known as pearls or "shot" to form. In many cases, the shot can constitute as much as 45% by weight of the collected mineral material.

The presence of shot with the collected mineral fibres is generally undesirable, because it hinders the performance of the fibrous material. When the man-made vitreous fibre material is to be used for insulation purposes, the high shot content can hinder the insulation properties of the material. In particular, a high shot content can result in the man-made vitreous fibres being of inadequate quality for use in certain applications such as acoustic insulation.

The presence of shot can also increase the overall density of the man-made vitreous fibre material, which is disadvantageous in many applications.

Whilst the processes for removing shot from mineral fibre material are known, many of these result inadequate removal of shot. Furthermore, where processes do exist that remove a sufficient amount of the shot, those processes tend to be too uneconomical use in the production of many types of product.

Therefore, it is an object of the present invention to provide a process that is effective at removing shot from mineral fibre material, and which are economical for use in a commercial process.

WO2011/012712A1 discloses a method of manufacturing a mineral fibre-containing element and an element produced by that method.

US3792943A discloses a method and apparatus for dry fibre distribution. GB2069876A discloses a process for the removal of granular material from mineral wool in the form of matted fibre.

The present invention is particularly useful for the production of man-made vitreous fibre material for use in applications where the presence of some shot can be tolerated, but in which the level of shot naturally produced in the mineral fibre forming process is too great. For these applications, it is particularly important that the cost of any subsequent processing of the man-made vitreous fibre material is kept to a minimum in order to ensure that the resulting product is economically viable.

The invention relates, in particular, to the production of loose fibres that are not bonded to each other to form a consolidated batt after being collected. This form of product is often supplied to the customer in the form of bales of fibres and subsequently applied by spraying. In this context, it is particularly important to eliminate to as great an extent as possible the presence of large pieces of unfiberised material from the man-made vitreous fibre material.

Therefore, the present invention provides a method for removing shot from mineral fibres according to claim 1.

The process of the invention has been found to be effective at removing shot, yet it is highly economical, because, in contrast with many prior art processes, the method and apparatus of the invention can form part of a continuous man-made vitreous fibre production line. This leads to significant advantages in terms of the speed of the process and, as a result, the cost of the resulting product.

According to the present invention we also disclose an apparatus for removing shot from mineral fibres comprising:
a disentanglement apparatus for disentangling a web of mineral fibres to provide disentangled fibres,
web supply means for supplying the web to the disentanglement apparatus, air flow supply means for supplying a primary air flow in which to suspend disentangled mineral fibres,
a sifting chamber into which the fibres are carried in the primary air-flow and in which shot separates from the fibres,
a discharge outlet at the lower end of the sifting chamber for collecting shot separated from the mineral fibres, and
a collector for collecting the disentangled mineral fibres,
wherein the disentanglement apparatus and the sifting chamber are separated by a lateral distance of at least 0.5 metres, preferably from 0.7 to 5 metres, more preferably from 1 to 3 metres.

It has been found that where the sifting chamber is separated from the disentanglement apparatus in this way, the apparatus can provide particularly effective shot removal. Separating the location of the disentanglement process and, where present, the sifting chamber, is a preferred feature of the method of the invention.

As used herein, "shot" is intended to mean vitreous material that is not in the form of elongate fibres. Generally, larger pieces of unfiberised material are considered to be more disadvantageous for the properties of the product than smaller pieces. The invention is particularly useful for treating mineral fibre webs containing shot with a maximum dimension of at least 600 µm. In some embodiments, at least 90 or 95% of the shot of that size is removed. The present invention is also particularly advantageous for removing shot with a maximum dimension of over 250 µm. Often at least 70 or 80% of the shot of that size is removed. The invention is also effective, however, in the removal of shot with a maximum dimension of at least 63 µm and even in the removal of shot with a maximum dimension of at least 25 µm.

The shot content of the man-made vitreous fibre material treated according to the invention can be reduced significantly. The content of shot having a maximum dimension greater than 63 µm can be reduced from, for example 40 or 45% by weight to as little as 33%, 25% or even 20%.

The resulting mineral fibre material with a low shot content is suitable for a number of uses. For example, it can be sprayed with cement onto, for example steel constructions or car park ceilings as insulation.

The invention is also particularly useful for making mineral fibre material suitable for marine insulation. In such applications, a low density is of particular importance.

A low shot content is also particularly important for the production of acoustic insulation. Therefore, the invention is particularly useful in this context.

According to the process of the invention the man-made vitreous fibre material collected from the primary air flow contains less than 1% binder. It is preferred that the man-made vitreous fibre material contains less than 0.7% binder and more preferred that less than 0.5% binder is present. Most preferably, essentially no binder is present in the man-made vitreous fibre material collected from the primary air-flow.

The material may, and usually does, however, contain other materials in addition to the man-made vitreous fibres, such as anti-statics and/or lubricants. Specific examples are silanes and processing oil. These additional materials are usually present in an amount less than 1% of the total weight of man-made vitreous fibre material collected from the primary air flow. Usually the amount is less than 0.5% or even less than 0.2%.

The man-made vitreous fibres processed in the present invention could be any man-made vitreous fibres, but are usually ceramic fibres or stone fibres. Preferably stone fibres are processed. Stone wool fibres generally have a content of iron oxide at least 3% and alkaline earth metals (calcium oxide and magnesium oxide) from 10 to 40%, along with other usual oxide constituents of mineral wool. These are silica, alumina, alkali metals (sodium oxide and potassium oxide) which are usually present in lower amounts, and also include titania and other minor oxides.

However, some stone fibres particularly useful in the invention are fibres containing less than 1% by weight iron oxide, around 17-23% by weight, preferably 18-22% by weight silica, a combined level of calcium oxide and magnesium oxide of 34-39% by weight and a maximum combined level of sodium oxide and potassium oxide of 3% by weight.

Fibre diameter is often in the range 3 to 20 microns, in particular 5 to 10 microns, as conventional.

As used herein, the term "collected web" is intended to include any mineral fibres that have been collected on a surface, i.e., they are no longer entrained in air.

The collected web could be a primary web that has been formed by collection of fibres on a conveyor belt and provided to the process of the invention without having been cross-lapped or otherwise consolidated. Alternatively, the collected web could be a secondary web that has been formed by cross-lapping or otherwise consolidating a primary web. Preferably, the collected web is a primary web.

The disentanglement of the fibres is very important in the present invention, because it opens and separates the fibres from each other, thereby releasing the shot that would otherwise remain trapped within the web. The disentanglement apparatus is preferably at least one roller which rotates about its longitudinal axis and has spikes protruding from its circumferential surface. The disentanglement process preferably comprises feeding the collected web to at least one roller which rotates about its longitudinal axis and has spikes protruding from its circumferential surface

Preferably the roller has a diameter based on the outer most point of the spikes of from 20cm to 80cm, more preferably from 30cm to 70cm still more preferably from 45cm to 60cm and most preferably from 50cm to 60cm. The length of the roller is usually from 50cm to 2m, preferably from 60cm to 1.5m and more preferably from 80cm to 1.2m. These dimensions of the roller have the advantage that relatively high speeds of the outer periphery can be achieved, whilst the size of the apparatus is not prohibitively large.

Rapid rotation of the roller has been found to be particularly effective in obtaining efficient removal of shot from the fibres. Therefore, in preferred embodiments the roller rotates at a rate of 500 rpm to 5000 rpm, preferably from 1000 rpm to 4000 rpm, more preferably 1500 rpm to 3500 rpm and most preferably from 2000 rpm to 3000 rpm.

The high rate of rotation of the roller can result in its outer periphery travelling at a particularly high speed. According to the invention, the outer periphery of the roller moves at a speed of from 15 to 200 m/s. More preferably, the speed is from 25 to 150 m/s, still more preferably from 40 to 120 m/s and most preferably from 60 to 90 m/s. This speed refers to the speed of the outermost points of the spikes. These high speeds have been found to be particularly effective for removing shot from the mineral fibre material.

In some embodiments there are at least two rollers. These rollers may operate in tandem or sequentially.

The roller is preferably positioned within a substantially cylindrical chamber. The chamber will have inlets through which the mineral fibres are fed to the roller. The chamber will also have an outlet through which the disentangled mineral fibres are expelled. Preferably, they are expelled in the primary air flow through the outlet.

In preferred embodiments, the mineral fibres are fed to the roller from above. It is also preferred for the disentangled mineral fibres to be thrown away from the roller laterally from the lower part of its circumference. In the most preferred embodiment, the mineral fibres are carried approximately 180° by the roller before being thrown off.

The roller preferably occupies the majority of the chamber. Preferably the tips of the spikes are less than 10cm, more preferably less than 7cm and most preferably less than 4cm from the curved wall of the substantially cylindrical chamber. This results in the air flow created by the roller being greater and a more thorough disentanglement of the fibres by the air flow and by the spikes themselves.

According to the invention, the fibres are suspended in a primary air flow. By suspending the man-made vitreous fibre material in a primary air flow, the more dense shot and heavier chunks of wool can be sifted out as they are influenced by the air flow or flows to a lesser extent, so fall more readily under the force of gravity.

As used herein, the term "air flow" should be understood broadly so as to include not only a flow of air comprising gases in the proportions present in the atmosphere of Earth, but also a flow of any suitable gas or gases in any suitable proportions.

The disentangled fibres are generally thrown off the roller in the primary air flow. In some embodiments, the roller will contribute to the primary air flow, but usually the rotation of the roller (together with the fibres being carried on the roller) will be the sole source of the primary air flow.

Preferably, the primary air flow has an initial speed of 15 to 200 m/s, preferably from 25 to 150 m/s, more preferably from 40 to 120 m/s, most preferably from 60 to 90 m/s.

The apparatus disclosed requires air flow supply means for supplying the primary air flow. This air flow supply means can be formed as part of the disentanglement apparatus. When a spike roller is used as the disentanglement apparatus, this usually acts for a means for generating the primary air flow itself as it creates a flow of disentangled mineral fibres suspended in an air flow.

In the method, the primary air flow preferably enters a sifting chamber. In the sifting chamber, turbulence within the primary air flow allows the dense particles to be sifted to the bottom of the chamber. It has been found, however, that some separation between the disentanglement apparatus, usually a spike roller, and the sifting chamber can result in improved shot removal. Therefore, in the method of the invention it is preferred that the mineral fibres travel for from 0.5 to 5 metres, preferably from 0.7 to 3 metres, more preferably from 1 to 2 metres in the primary air flow before reaching the sifting chamber.

In the apparatus disclosed, the sifting chamber is separated from the disentangled apparatus in the lateral direction by a distance of at least 0.5 metres, preferably from 0.7 to 5 metres, more preferably from 1 to 3 metres.

As the primary air flow enters the sifting chamber there will be a significant amount of turbulence in the air flow. This is generally desirable, because it is believed to allow dense particles to be sifted to the bottom of the chamber and promotes further opening of tufts of fibres to allow the shot to be released.

The sifting chamber usually includes a discharge outlet at its lower end for collecting shot that is separated from the fibrous material. The sifting chamber also usually includes an outlet for the mineral fibres at a higher level than the discharge outlet. Usually, the outlet for the mineral fibres is also at a higher level than the inlet through which the fibres enter the sifting chamber. Often, the outlet for the mineral fibres is at the upper end of the sifting chamber.

The mineral fibres, when suspended in the primary air flow are subjected to a further air flow in a different direction to the primary air flow. This helps to generate further turbulence in the primary air flow, which assists in opening the tufts of fibres to release the shot and allows the fibrous material to be carried in the turbulent air flows, whilst the shot, which is far denser falls under the force of gravity. The primary air flow is generally lateral and the further air flow is generally upwards. In some embodiments, a plurality of further air flows is provided.

In the apparatus, a further air flow supply means is present for supplying the further air flow to the primary air flow. The further air flow supply means are preferably positioned at the lower end of the sifting chamber and are configured to supply an upwards flow of air within the sifting chamber. Preferably, there are at least two further air flow supply means. In one embodiment, these air flow supply means are adapted to deliver a generally upwards further air flow, but are angled towards each other.

The primary air flow supply means are preferably positioned at the side of the sifting chamber and configured to supply an air flow laterally across the chamber.

It has been found that particularly efficient separation of shot from fibrous material is obtained when a further air flow has a low speed. This is particularly when this is combined with a high speed primary air flow, usually produced by the quickly rotating spike roller. Therefore, it is preferable that the further air flow has a speed of from 0.3 to 10 m/s, preferably from 0.5 to 6 m/s, more preferably from 1 to 5 m/s, most preferably from 1 to 3 m/s. The further air flow, directed in an upwards manner, allows the fibrous material to be suspended for a longer period, particularly in the sifting chamber. However, the low speed of the further air flow or air flows allows the more dense shot to descend to the bottom of the sifting chamber more easily. A further air flow in the upwards direction also allows the fibrous material to exit the sifting chamber through an outlet and upper end of the chamber, whilst the shot is collected through an outlet at the bottom end of the chamber. If the fibres exit the sifting chamber through an outlet at the upper end, a low further air flow speed, in particular within the ranges discussed above, allows the fibres to remain suspended in the sifting chamber for a longer period.

In order to effect a thorough sifting of the fibres, it is preferred to configure the apparatus such that the average dwell time of the fibres within the sifting chamber is at least 0.5 seconds, more preferably at least 2 seconds, or even at least 3 seconds.

The sifting chamber can very widely in volume, but it is believed that a volume of from 5 m³ to 20 m³, in particular from 7 m³ to 15 m³ and more preferably from 8 m³ to 12 m³ gives optimum results in terms of shot removal.

In a particularly preferred embodiment, after exiting the sifting chamber, the mineral fibres are removed from the air flow in a cyclone chamber.

Optionally, the process may be repeated for further shot removal.

The method may be performed as a batch process, but it is preferred that the method is performed at a mineral wool production line. In that case, a primary or secondary mineral wool web can be carried directly after being collected or, as the case may be, cross-lapped into the fibre disentanglement process. This provides a particularly cost efficient and versatile method to remove shot from mineral fibres.

Therefore, the apparatus disclosed preferably further incorporates mineral fibre-forming apparatus. This can be any apparatus suitable for that purpose, for example, a cascade spinner. In preferred embodiments, the mineral fibre-forming apparatus is a cascade spinner, which tends to produce a significant amount of shot to be removed. In each case, a mineral melt is supplied and fibres are produced by the effect of centrifugal action of the apparatus.

When a mineral fibre-forming apparatus is included in the apparatus disclosed, the apparatus will also include a preliminary collector arranged to receive the fibres from the fibre-forming apparatus. The apparatus will also include suction means for applying suction through the collector and thereby collecting the fibres on the collector as a web.

The preliminary collector is preferably in the form of a continuously operated first conveyor belt. The belt is pervious to air. The fibres form a primary web on the belt. Such a means are positioned behind the preliminary collector to allow an air flow through the collector. Where the preliminary collector is a conveyor belt, it can also act as transport means for carrying the collected web towards the disentanglement apparatus. Otherwise, other transport means may be required.

The apparatus may optionally comprise means for treating the primary web in any manner known to the skilled person in the art. For example, the apparatus can comprise a pendulum belt for cross-lapping the primary web onto a further continuously operated conveyer belt, to form a secondary mineral fibre web.

In a preferred embodiment, the preliminary collector is in the form of a conveyor belt leading to an inlet duct. The inlet duct may have conveying rollers at its upper edge to assist with the movement of the mineral fibres through the inlet ducts.

Between the preliminary collector (when present) and the disentanglement apparatus, in some embodiments, there is a substantially vertical duct. Often the substantially vertical duct will be narrower at its lower end than at its upper end.

The invention as claimed will be described in the following by way of example and with reference to the drawings in which;

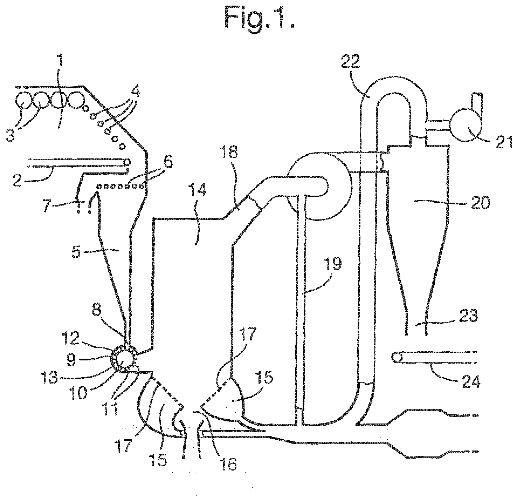

Figure 1 is a schematic drawing of an apparatus for removing shot from the fibres.

Apparatus suitable for use in the method in the present invention can be seen in Figure 1, where a fibre-forming apparatus and preliminary collector are configured to carry a mineral fibre web to the inlet duct 1.

The apparatus comprises an inlet duct 1 for a man-made vitreous fibre web. At the lower edge of the inlet duct 1, there is a conveyor 2 that carries the mineral fibres through the inlet duct 1. As the upper edge of the inlet duct, conveyer rollers 3, assist with feeding the mineral fibres through the inlet duct 1. At the end of the inlet duct 1, a first set of mutually spaced elongated elements 4 extend across the end of the inlet duct 1. These serve to break up the larger pieces of the mineral fibre web. In some embodiments, the elongated elements 4 are in the form of rotating brushes that draw the mineral fibres between them as they rotate.

The mineral fibres that pass through the end of the inlet duct 1 then fall downwards into a substantially vertical duct 5. In the embodiments shown, a second set of mutually spaced elongated element 6 extends across the upper end of the duct. The second set of elongated elements is usually more closely spaced that the first. In the embodiments shown, the second set of elongated elements rotate so as to allow sufficiently small pieces of the mineral fibres web to pass through, but carry larger pieces away via mineral fibre web recycling duct 7.

The vertical duct 5 generally becomes narrower at its lower end. In the embodiment shown, the lower end of the vertical duct forms the inlet 8 to the substantially cylindrical chamber 9. As shown, the inlet 8 is at an upper part of the substantially cylindrical chamber 9. In use, the mineral fibre web passes through the vertical duct 5 and through the inlet 8 into the cylindrical chamber 9.

In an alternative embodiment, the vertical duct 5 is omitted. Instead, a feeding mechanism is provided for feeding in a web of mineral fibres directly the cylindrical chamber 9. The feeding mechanism may for example comprise a conveyer belt and optionally one or more feed rollers arranged for controlled advances of the web into the cylindrical chamber 9.

A cylindrical chamber 9 has a roller 10 having spikes 11 protruding from its circumferential surface 12. The roller 10 shown in Figure 1 rotates anticlockwise as shown in the drawing, so that mineral fibres are carried from the inlet 8 around the left side of the roller 10 as shown and thrown out laterally in a primary air flow into a sifting chamber 14.

The spikes may be permanently fixed to the roller for optimum resistance to wear and tear. For example, the spikes may be fixed by gluing or welding the spikes in blind holes arranged in the roller outer periphery. Alternatively, the spikes may be replaceable. This can for example by accomplished by the roller being a hollow cylinder with holes in the cylindrical wall. The spikes can then for example have a head and be inserted through the holes through the inside. Hereby spikes can be replaced if they are broken or worn. Further by having replaceable spikes it is possible to change the pattern of the spikes. Hereby it is possible to optimise the pattern for different types of material to be disentangled, e.g. depending on how tightly the mineral fibres are packed.

In the embodiments shown, the primary air flow is created by the rotation of the roller 10 with in the cylindrical chamber 9, and in particular where the movement of the spike 11 and fibres through the space between the circumferential surface of the roller and the curved wall 13 of the cylindrical chamber 9.

The sifting chamber 14 shown in Figure 1 comprises a discharge opening 16 and further air flow supply means 16. In use, shot separates from the fibrous material in the sifting chamber 14 and collects in the discharge opening 16. The further air flow supply means 15 comprise openings through which the further air flow is supplied. Gauzes 17 are disposed across the openings of the further air flow supply means 15. These gauzes allow the further air flow to pass through into the sifting chamber 14, but are intended to prevent the entry of materials into the supply means. The further air flow supply means 15 show direct the further air flow upwards into the sifting chamber 14.

The further air flow meets the primary air flow containing the disentangled fibres in the sifting chamber 14. The further air flow has the effect of carrying the disentangled fibres upwards within the sifting chamber 14. The more compacted fibres and shot of mineral material will not be carried upwards in the sifting chamber, but fall to the lower end and the discharge opening 16.

The disentangled fibres are carried to the upper part of the sifting chamber 14 where a removal duct 18 is positioned to carry the mixture from the sifting chamber 14. A first air recycling duct 19 is joined to the removal duct 18 and recycles some of the air from the removal duct 18 back to the further air supply means 15.

The removal duct leads to a cyclone chamber 20. The cyclone chamber 20 has a second air recycling duct 22 leading from its upper end to further air supply means 15. A filter 21 is adjoined to the second air recycling duct. In the use, the filter 21 removes stray mineral fibres from the second air recycling duct 22. As air is removed from the upper end of the cyclone chamber 20, the mixture of disentangled fibres and binder falls through a cyclone chamber outlet 23 at the lower end of the cyclone chamber 20.

A collector 24 is positioned below the cyclone chamber outlet 23. In the embodiments shown, the collector 24 is in the form of a conveyer, which carries the collected fibres away to be packaged as bales.

## Claims

1. A method for removing shot from mineral fibres comprising:
providing a collected web of mineral fibres containing shot;
subjecting the collected web of fibres to a disentanglement process comprising feeding the collected web to at least one roller which rotates about its longitudinal axis and has spikes protruding from its circumferential surface;
suspending the disentangled fibres in a primary air flow, thereby allowing separation of the fibres from the shot; and
collecting the fibres;
wherein from 0% up to less than 1% by weight binder is present in the fibres collected from the primary air flow; and
wherein the outermost points of the spikes of the roller move at a speed of from 15 to 200m/s,
wherein the mineral fibres, when suspended in the primary air flow, are subjected to a further air flow in a different direction to the primary air flow,
wherein the primary air flow is generally lateral and the further air flow is generally upwards.

2. A method according to claim 1, wherein from 0 to 0.5% by weight binder is present in the fibres collected from the primary air flow.

3. A method according to claim 1 or claim 2, wherein the roller has a diameter based on the outermost points of the spikes of from 20 cm to 80 cm, preferably from 30 cm to 70 cm, more preferably from 45 cm to 65 cm and most preferably from 50 cm to 60 cm.

4. A method according to any preceding claim, wherein the roller rotates at a rate of from 500 rpm to 5000 rpm, preferably from 1000 rpm to 4000 rpm, more preferably from 1500 rpm to 3500 rpm, most preferably from 2000 rpm to 3000 rpm.

5. A method according to any preceding claim, wherein the outermost points of the spikes of the roller move at a speed of from 25 to 150 m/s, preferably from 40 to 120 m/s, most preferably from 60 to 90 m/s.

6. A method according to any preceding claim, wherein the method is performed at a mineral wool production line, which feeds a primary or secondary mineral wool web into the fibre disentanglement process.

7. A method according to any preceding claim, wherein the primary air flow has an initial speed of 15 to 200 m/s, preferably from 25 to 150 m/s, more preferably from 40 to 120 m/s, most preferably from 60 to 90 m/s.

8. A method according to any of the preceding claim wherein the further air flow has a speed of from 0.3 to 10 m/s, preferably from 0.5 to 6 m/s, more preferably from 1 to 5 m/s, most preferably from 1 to 3 m/s.

9. A method according to any preceding claim, wherein the primary air-flow carries the mineral fibres into a sifting chamber.

10. A method according to claim 9, wherein the fibres are carried in the primary air flow for from 0.5 to 5 metres, preferably from 0.7 to 3 metres, more preferably from 1 to 2 metres before reaching the sifting chamber.

11. A method according to any of claims 7 to 10, wherein the mineral fibres travel for from 0.5 to 5 metres, preferably from 0.7 to 3 metres, more preferably from 1 to 2 metres in the primary air flow before meeting the further air flow.

## Patentansprüche

1. Verfahren zum Entfernen von Granulat aus Mineralfasern umfassend:
Bereitstellen einer gesammelten Mineralfaserbahn, die Granulat enthält;
Unterziehen der gesammelten Faserbahn einem Entwirrungsvorgang, umfassend ein Zuführen der gesammelten Bahn zu wenigstens einer Walze, die um ihre Längsachse rotiert und Dorne aufweist, die aus ihrer umlaufenden Oberfläche herausragen;
Aussetzen der entwirrten Fasern einem primären Luftstrom, wobei dadurch eine Trennung der Fasern von dem Granulat ermöglicht wird; und
Sammeln der Fasern;
wobei von 0 Gew.-% bis zu weniger als 1 Gew.-% Bindemittel in den aus dem primären Luftstrom gesammelten Fasern vorhanden ist; und
wobei die äußersten Spitzen der Dorne der Walze sich in einer Geschwindigkeit von 15 bis 200 m/s bewegen,
wobei die Mineralfasern, wenn sie dem primären Luftstrom ausgesetzt werden, einem weiteren Luftstrom in einer von dem primären Luftstrom unterschiedlichen Richtung unterzogen werden,
wobei der primäre Luftstrom im Allgemeinen lateral gerichtet ist und der weitere Luftstrom im Allgemeinen aufwärts gerichtet ist.

2. Verfahren nach Anspruch 1, wobei 0 Gew.-% bis 0,5 Gew.-% Bindemittel in den aus dem primären Luftstrom gesammelten Fasern vorhanden ist.

3. Verfahren nach Anspruch 1 oder 2, wobei die Walze, basierend auf den äußersten Spitzen der Dorne, einen Durchmesser von 20 cm bis 80 cm, bevorzugt von 30 cm bis 70 cm, stärker bevorzugt von 45 cm bis 65 cm und am stärksten bevorzugt von 50 cm bis 60 cm aufweist.

4. Verfahren nach einem der vorhergehenden Ansprüche, wobei die Walze in einer Geschwindigkeit von 500 U/min bis 5000 U/min, bevorzugt von 1000 U/min bis 4000 U/min, stärker bevorzugt von 1500 U/min bis 3500 U/min, am stärksten bevorzugt von 2000 U/min bis 3000 U/min rotiert.

5. Verfahren nach einem der vorhergehenden Ansprüche, wobei sich die äußersten Spitzen der Dorne der Walze in einer Geschwindigkeit von 25 bis 150 m/s, bevorzugt von 40 bis 120 m/s, am stärksten bevorzugt von 60 bis 90 m/s bewegen.

6. Verfahren nach einem der vorhergehenden Ansprüche, wobei das Verfahren an einer Fertigungsstraße für Mineralwolle durchgeführt wird, die dem Faserentwirrungsvorgang eine primäre oder sekundäre Mineralwollbahn zuführt.

7. Verfahren nach einem der vorhergehenden Ansprüche, wobei der primäre Luftstrom eine Anfangsgeschwindigkeit von 15 bis 200 m/s, bevorzugt von 25 bis 150 m/s, stärker bevorzugt von 40 bis 120 m/s, am stärksten bevorzugt von 60 bis 90 m/s aufweist.

8. Verfahren nach einem der vorhergehenden Ansprüche, wobei der weitere Luftstrom eine Geschwindigkeit von 0,3 bis 10 m/s, bevorzugt von 0,5 bis 6 m/s, stärker bevorzugt von 1 bis 5 m/s, am stärksten bevorzugt von 1 bis 3 m/s aufweist.

9. Verfahren nach einem der vorhergehenden Ansprüche, wobei der primäre Luftstrom die Mineralfasern in eine Siebkammer trägt

10. Verfahren nach Anspruch 9, wobei die Fasern in dem primären Luftstrom für von 0,5 bis 5 Meter, bevorzugt von 0,7 bis 3 Meter, stärker bevorzugt von 1 bis 2 Meter getragen werden, bevor sie die Siebkammer erreichen.

11. Verfahren nach einem der Ansprüche 7 bis 10, wobei die Mineralfasern in dem primären Luftstrom für von 0,5 bis 5 Meter, bevorzugt von 0,7 bis 3 Meter, stärker bevorzugt von 1 bis 2 Meter transportiert werden, bevor sie auf den weiteren Luftstrom treffen.

## Revendications

1. Procédé pour l'élimination d'amas granulaire de fibres minérales, consistant à :
fournir un voile de fibres minérales collecté contenant un amas granulaire ;
soumettre le voile de fibres collecté à un processus de désenchevêtrement comprenant l'introduction du voile collecté à au moins un rouleau qui tourne autour de son axe longitudinal et présente des pointes qui dépassent de sa surface circonférentielle ;
suspendre les fibres désenchevêtrées dans un flux d'air primaire, permettant ainsi la séparation des fibres de l'amas granulaire ; et
collecter les fibres ;
dans lequel de 0 % à moins de 1 % en poids de liant est présent dans les fibres collectées du flux d'air primaire ; et
dans lequel les points les plus extérieurs des pointes du rouleau se déplacent à une vitesse de 15 à 200 m/s.
dans lequel les fibres minérales, lorsqu'elles sont suspendues dans le flux d'air primaire, sont soumises à un flux d'air supplémentaire dans une direction différente du flux d'air primaire,
dans lequel le flux d'air primaire est généralement latéral et le flux d'air supplémentaire est généralement vers le haut.

2. Procédé selon la revendication 1, dans lequel de 0 % à 0,5 % en poids de liant est présent dans les fibres collectées du flux d'air primaire.

3. Procédé selon la revendication 1 ou la revendication 2, dans lequel le rouleau a un diamètre basé sur les points les plus extérieurs des pointes de 20 cm à 80 cm, préférablement de 30 cm à 70 cm, plus préférablement de 45 cm à 65 cm et le plus préférablement de 50 cm à 60 cm.

4. Procédé selon l'une quelconque des revendications précédentes, dans lequel le rouleau tourne à une vitesse de 500 tpm à 5 000 tpm, préférablement de 1 000 tpm à 4 000 tpm, plus préférablement de 1 500 tpm à 3 500 tpm, le plus préférablement de 2 000 tpm à 3 000 tpm.

5. Procédé selon l'une quelconque des revendications précédentes, dans lequel les points les plus extérieurs des pointes du rouleau se déplacent à une vitesse de 25 à 150 m/s, préférablement de 40 à 120 m/s, le plus préférablement de 60 à 90 m/s.

6. Procédé selon l'une quelconque des revendications précédentes, le procédé étant effectué au niveau d'une chaîne de production de laine minérale, qui introduit un voile de laine minérale primaire ou secondaire dans le processus de désenchevêtrement des fibres.

7. Procédé selon l'une quelconque des revendications précédentes, dans lequel le flux d'air primaire a une vitesse initiale de 15 à 200 m/s, préférablement de 25 à 150 m/s, plus préférablement de 40 à 120 m/s, le plus préférablement de 60 à 90 m/s.

8. Procédé selon l'une quelconque des revendications précédentes, dans lequel le flux d'air supplémentaire a une vitesse de 0,3 à 10 m/s, préférablement de 0,5 à 6 m/s, plus préférablement de 1 à 5 m/s, le plus préférablement de 1 à 3 m/s.

9. Procédé selon l'une quelconque des revendications précédentes, dans lequel le flux d'air primaire transporte les fibres minérales dans une chambre de tamisage.

10. Procédé selon la revendication 9, dans lequel les fibres sont transportées dans le flux d'air primaire sur 0,5 à 5 mètres, préférablement sur 0,7 à 3 mètres et plus préférablement sur 1 à 2 mètres avant d'atteindre la chambre de tamisage.

11. Procédé selon l'une quelconque des revendications 7 à 10, dans lequel les fibres minérales sont déplacées sur 0,5 à 5 mètres, préférablement sur 0,7 à 3 mètres, plus préférablement sur 1 à 2 mètres dans le flux d'air primaire avant d'être exposées au flux d'air supplémentaire.
